# EUROPEAN PATENT SPECIFICATION

(11) **EP 2 259 508 B1**
(45) Date of publication and mention of the grant of the patent: **13.02.2013**
(21) Application number: 09161918.9
(22) Date of filing: 04.06.2009
(51) Int. Cl.: H04L 12/931

(54) **Network element for switching time division multiplex signals using cell switch matrix having reduced cell loss probability**
Netzwerkelement zum Schalten von Zeitmultiplexsignalen mittels Zellenschaltmatrix mit verminderter Zellenverlustwahrscheinlichkeit
Élément de réseau pour commuter des signaux de multiplexage à division temporelle en utilisant une matrice de commutation de cellule dotée d'une probabilité de perte de cellule réduite

(43) Date of publication of application: 08.12.2010
(73) Proprietor: Alcatel Lucent, 75007 Paris (FR)
(72) Inventor: Hermsmeyer, Christian, 90542 Eckental (DE); Hocke, Ralf, 91056 Erlangen (DE); Pleickhardt, Jörg, 90562 Heroldsberg (DE)
(74) Representative: Urlichs, Stefan

(56) References cited:
- EP-A2- 0 926 917
- WO-A1-03/013061
- US-A- 5 841 771
- US-A1- 2004 008 718

## Description

### Field of the Invention

The present invention relates to the field of telecommunications and more particularly to a network element and related method for switching time-division multiplex signals in a transport network.

### Background of the invention

while packet switched services are currently on the rise, transport networks today still rely mainly on circuit switched technology such as SDH (Synchronous Digital Hierarchy), where constant rate transport signals transport time-division multiplexed subrate signals. Payload signals are mapped into multiplex units, which in SDH are termed virtual containers. A multiplex unit represents an end-to-end path through the network and connections in the network are established by configuring the network elements to semi-permanently switch the corresponding multiplex unit, which is present at the same relative position in all consecutive transport frames, along that path.

Network elements are for example odd/drop multiplexers and digital crossconnects. Such network elements contain I/O (input/output) ports and a switch matrix interconnecting the I/O ports. The switch function which needs to be performed on the level of multiplex units to establish paths in the network encompasses switching in both, space and time domain, i.e. between different I/O ports and between different timeslot positions. Typically, the transport signals are retimed and aligned at the input port and the switch function is performed on time slots of the aligned signal in synchronism with a common system dock in accordance with a pre-configured interconnection map.

### Summary of the Invention

With the ever increasing traffic demand in today's networks, a need exists for network elements which can switch a high number of traffic signals at a time. On the other hand, network elements shall be cheap and compact and shall have a low power consumption.

In an unpublished European Patent Application with application number 08172422.1 entitled "Network Element for Switching Time Division Multiplex Signals" filed on 19.12.2008, applicant has described a network element for TDM traffic, which uses a cell based switch fabric. In particular, the switch fabric comprises a number of switch modules which are adapted to switch fixed-length cells on the basis of addresses contained in cell headers of the cells. Input ports contain a segmentation device for segmenting an input time-division multiplex signal into fixed-length cells and assigning address information to each cell. The output ports contain a reassembly device for reassembling cells received from said switch fabric into an output time-division multiplex signal.

United States Patent US 5,841,771 to Irwin et al. discloses a switch module operating simultaneously on ATM and STM TDM traffic, wherein incoming TDM frames are segmented into cells and switched together with incoming ATM cells in an integrated switch fabric and wherein the TDM traffic is reconstructed from the asynchronous cells used to transport it by either sequentially storing and randomly reading the octets in question so as to effect the desired altered temporal order of appearance of said octets, or by randomly storing and sequentially reading the octets for the same purpose.

This design allows to build a network element witn very high switching capacity at moderate equipment costs as compared to traditional design using space switches and time slot interchangers implemented through specialized integrated circuits.

The present application provides an improvement to this technology. The inventors have recognized that in certain situations, a cell-based switch fabric can be overloaded with cells. This will lead to an undesired increase of the cell loss probability. Such a situation would occur for example, if the some time slots of a number of different input TDM signals are to be switched to different time slots at the some output port. The inventors therefore propose different techniques to improve the randomicity of cells in a cell stream before entering the cell-based switch fabric. This is achieved by a process which scrambles the order in which cells belonging to different time slots of an input TDM signal are sent into the switch.

### Brief Description of the Drawings

Preferred embodiments of the present invention will now be described with reference to the accompanying drawings in which
- figure 1: shows the architecture of a network element using a cell-based switch fabric;
- figure 2: shows the internal signal structure in the network element of figure 1;
- figure 3: shows the cell structure used in the network element of figure 1;
- figure 4: shows the cell structure as transmitted over a 4 lane wide parallel interface;
- figure 5: shows a block diagram of a line card used in the network of figure 1;
- figure 6: shows in more detail the operation of the segmentation and reassembly device in figure 5; and
- figure 7: shows an improvement of the operation of the matrix adapter in figure 5.

### Detailed Description of the Invention

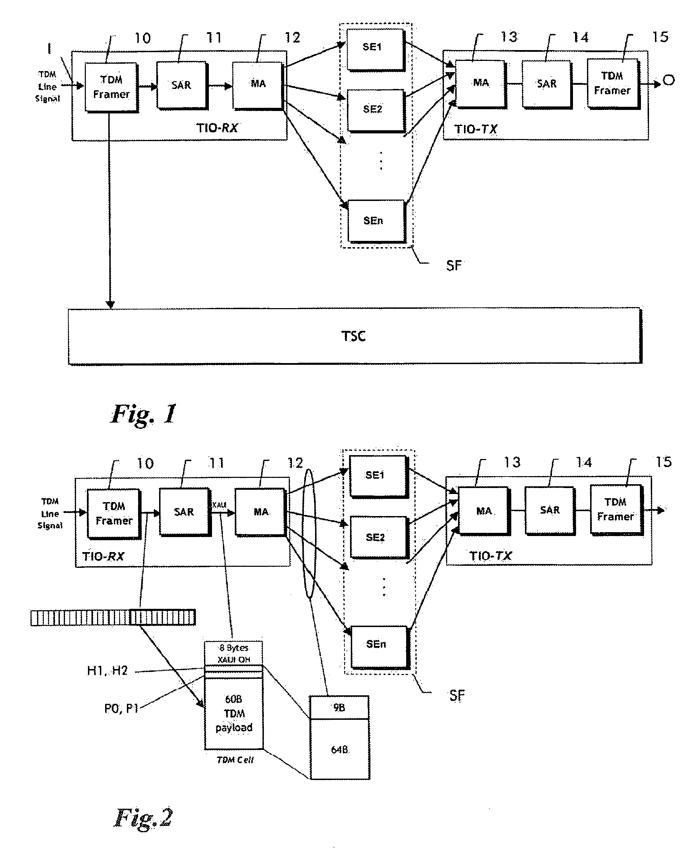

An embodiment of a network element is shown in figure 1. It contains a number of input ports and output ports. For the sake of simplicity, only one input part I is shown and only one output port O is shown. Input ports and output ports are arranged on line cards TIO. Line cards contain receiver function RX and transmitter functions TX. In the figure, only one receiver function RX-TIO and only one transmitter function TX-TIO is shown. It should be clear however, that a network element in a real application has a number of line cards, such as for example 32 line cards in a preferred embodiment. Moreover, each line card can accommodate more than one input and corresponding output ports. In a preferred embodiment, each line card has 8 input ports for 10Gb/s TDM signals and 8 corresponding outputs ports. In total this would add up to a system capacity of 2.5 Tb/s.

The line cards are connected to a switch fabric SF, which is built from a number of switch modules SE1-SEn. These modules SE1-SEn are self-routing switch modules with full-duplex switching capacity, which support fixed sized cell switching. Such switch modules are commercially available on the market and are typically used for switching of Ethernet traffic or other kind of packet switched traffic. Moreover, such modules are off-the-shelf components produced in relatively large quantities. Reuse of these devices for TDM applications allows to build large network elements using newest technology with the highest level of integration at moderate price.

In the preferred embodiment having a system capacity of 2,5 Tb/s, the switch fabric SF contains 20 switch modules arranged on 5 fabric cards plus additional 12 switch modules arranged on 3 fabric boards for equipment protection purpose. Each switch module has a switch capacity of 64x64 lines at 6,25 Gb/s. It should be understood that this choice and dimensioning is just an example and could be scaled as needed and as components are available.

The line cards TIO contain a TDM framer 10, a module for a segmentation and reassembly (SAR) function 11, and a matrix udapter (MA) 12. In receive direction (ingress side), the TDM framer 10 terminates the transport overhead of received transport signals. Additionally, the framer also performs a retiming and alignment function for the received signals. The SAR module 11 extracts the individual timeslots in the received TDM signals that are to be forwarded and crossconnected by the system and converts these into a cell format. The SAR module also inserts into each cell a cell header that contains address information as will explained below. The matrix adapter 12 distributes the cells to the switch modules SE1-SEn of the switch fabric SF and contains a traffic manager for scheduling and traffic shaping. Such matrix adapters are also commercially available on the market for use in Ethernet or packet switching applications.

In addition, the network element contains a TDM shelf controller TSC, via which the line cards can be configured as will be explained below in more detail. The shelf controller also receives overhead information terminated in the TDM framer.

The transmit side (egress side) of a line card TIO-TX is shown on the right hand side of figure 1. In transmit direction, a matrix adapter 13 receives cells from the switch fabric SF, orders these and feeds them to a SAR module 14. The SAR module extracts the useful data from the received cells and reassembles these into multiplex units. A TDM framer 15 mops the multiplex units into newly created TDM frames for onward transmission.

As explained, signal flow in figure 1 is from the left to the right. A TDM line signal structured into frames of some length is received ot input port 1. In the embodiment, the line signal may be an STM64 signal which has a capacity of 10Gbit/s. An STM64 frame contains 64 higher order multiplex units VC-4, Alternatively, a line signal multiplexed of 4 × STM16 or 16 × STM4 or combinations thereof can be used. Moreover, the SONET equivalent STS-192 can equally be used as line signal. In any case, the switching granularity is chosen as STS-1, which corresponds to 1/3 STMT. This is, however, only on internal switching entity while frame processing is done prior to the switching, so that STM1 for example can be switched as 3 independent STS-1. The actual frame processing is done by the TDM framer 10, which terminates the section overhead of the STM64 frames and processes their AU pointers.

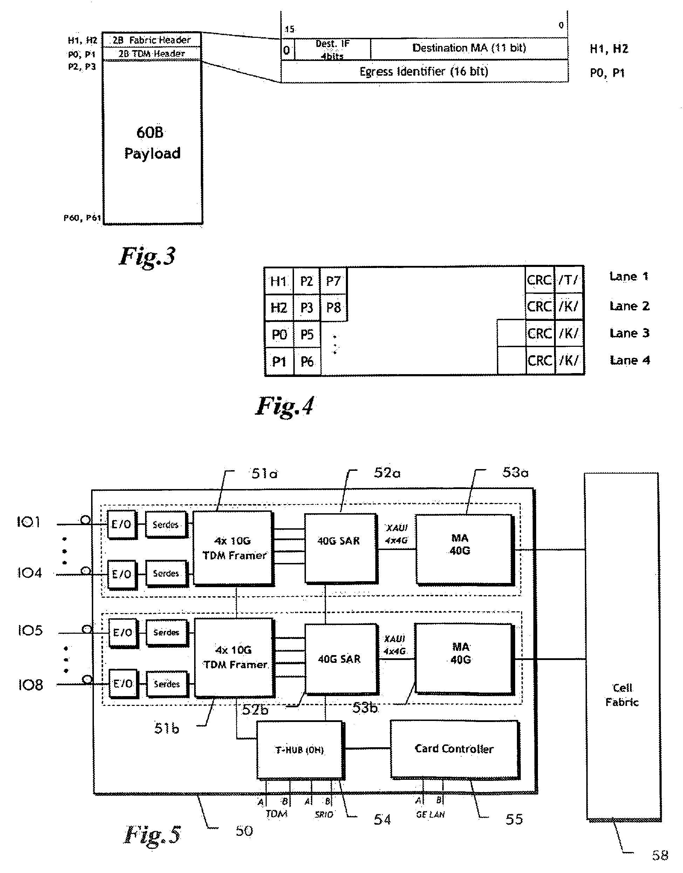

The signal structure is shown schematically in figure 2. The output of TDM framer 10 is a continuous byte stream, still structured into frames but synchronized to a local clock and with the frame header (section overhead) extracted. The multiplex units (tributary units) will be found in fixed time slots within each framer. The SAR module 11 extracts the multiplex units from the time slots and converts these into a cell format by segmenting the bitstream into 60B payload cells. The output of SAR module 11 has a cell format with 60B payload, 4B address overhead and an additional 8B cell header which contains framing and CRC bytes. In the preferred embodiment, use is made of a modified XAUI interface (XAUI stands for "10 Gigabit attachment unit interface"), which is a popular inter-chip or backplane format for 10G Ethernet applications, The XAUI interface between SAR 11 and MA 12 is a parallel interface with a width of 4 lanes. Distribution of the cell bytes over the 4 parallel lanes is shown in figure 4. The 8 byte XAUI cell header is located there at the end of the cell and contains CRC (cyclic redundancy check) and framing (/K/, /T/) bytes, which determine the end of the cell. It should be understood that XAUI or modifications thereof are just one possibility for the inter-chip interface and that other cell based interface formats could equally be used.

The interface between the MA 12, 13 and the switch fabric SF is a proprietary interface with a 9 byte cell header, which additionally contains a timestamp that takes care of the order of the cells at the transmit side MA 13.

The 48 address field, which is shown in more detail in figure 3, contains a 28 fabric header and a 2B TDM header. The fabric header is looked at by the switch fabric. It contains an address that is indicative of the output port tao which the cell is going, Since each line card carries 8 output ports, the fabric header contains 11 bits which identify the destination MA and 4 bits which identify the output port served by that destination MA, The first bit is used to distinguish unicast from multicast connections as will be explained further below. In case of unicast connections, this bit is set to '0'.

The TDM header is looked at by the transmit side SAR module and contains a 16 bit egress identifier. The least significant 8 bits (P1) indicate the time slot to which the cell belongs. Since the network element in the embodiment switches in granularity of STS-1 (Synchronous Transport Signal level 1), there are 192 timeslots in a 10G output signal (STM64 or STS-192). Hence, 8 bits are sufficient to address these (2⁸=256). The most significant 8 bits (P0) identify the 10G signal, to which the timeslot belongs into which the cell payload needs to be mapped. This may seem redundant in view of the information of the fabric header H1, H2, but proves useful when multicast connections are involved, for example for protection switching, to identify the signal in the system unambiguously.

A line card 50 for the network element of figure 1 is shown in figure 5. It contains 8 I/O ports IO1-IO8 for connecting optical fiber links. Each I/O port IO1-IO8 is equipped with an E/O converter (electrical/ optical) connected to a Serializer/Deserializer (Serdes), which converts data between serial and parallel interfaces in each direction. The line card 50 further contains two framer circuits 51 a, 51b, each framer circuit 51a, 51b serves four I/O ports and has a capacity of 4 × 10G. Each of the two framer circuits 51a, 51b is connected to a SAR module 52a, 52b, which also has a capacity of 40G, and each of the two SAR modules 52a, 52b connects to a MA 53a, 53b. The two MAs 53a, 53b each are connected via a 4 lone wide interface to the switch fabric 58. It should be noticed that all functions of the line card are bidirectional and, contain receive and trat-smit functionality. Interconnections on the line card 50 as well as external fiber connections are shown schematically and are preferably implemented as distinct physical connections for the two directions of transmission.

The line card 50 further contains a card controller 55, which is connected to the two framer circuits 51a, 51 b and the SAR modules 52a, 52b via a hub circuit 54. Hub 54 serves as a bridge and interconnects different type of chip interfaces. The card controller 55 has a LAN interface (GE LAN) to the controller TSC (see figure 1). The hub 54 provides additional external interfaces such as a serial interface SRIO and a multiplexed TDM inferface. As control interface between the integrated circuits on the line card and the hub 54 serves a compact PCI interface (CPCI).

The framer circuits 51a, 51b terminate the section overhead of received line signals and forward the control bytes via the hub 54 to the card controller 55. The card controller 55 manages and configures the line card. However, it is also possible that the shelf controller TSC manages and configures the framer and SAR modules directly via the external interface of the hub 54 and can hence take over the functions of the card controller 55, so that a line card can also be implemented without a separate card controller.

The SAR segments the timeslots from the received TOM signal into cells and assigns the fabric and TDM addresses. These have been configured by the card controller 55 or the TSC directly, The MA is a standard component for Ethernet devices and provides in cooperation with the cell based switch fabric 58 an interconnection function to the transmit side MA, which distributes received cells in accordance with the 4 destination interface bits to the appropriate output port. The MAs in receive and transmit direction and the switch fabric SF can hence be seen as a three stage switch matrix. It should be understood that depending on the system capacity such switch matrix can also have more than three stages.

Further to the above described point to point connections, which allows to switch TDM sub-signals in time and space domain from one input port to one output port, the network element of the above embodiments may additionally provide the ability to send an input time slot (STS-1) to more than one output ports at a time. Such connections are generally termed multicast connections. For a multicast connection, the fabric header H1, H2 will be replaced by a 15 bit multicast address and the fabric modules SE1 to SEn and MAs are configured through the fabric controller to switch cells carrying a certain multicast address to the appropriate output ports. Such multicast connections are primarily used for protection switching, where an input signal needs to be sent over redundant links. In case of a multicast connection, the first bit of the fabric header is set to '1'. This is described in more detail in co-pending patent application 08172422.1, which is incorporated by reference herein.

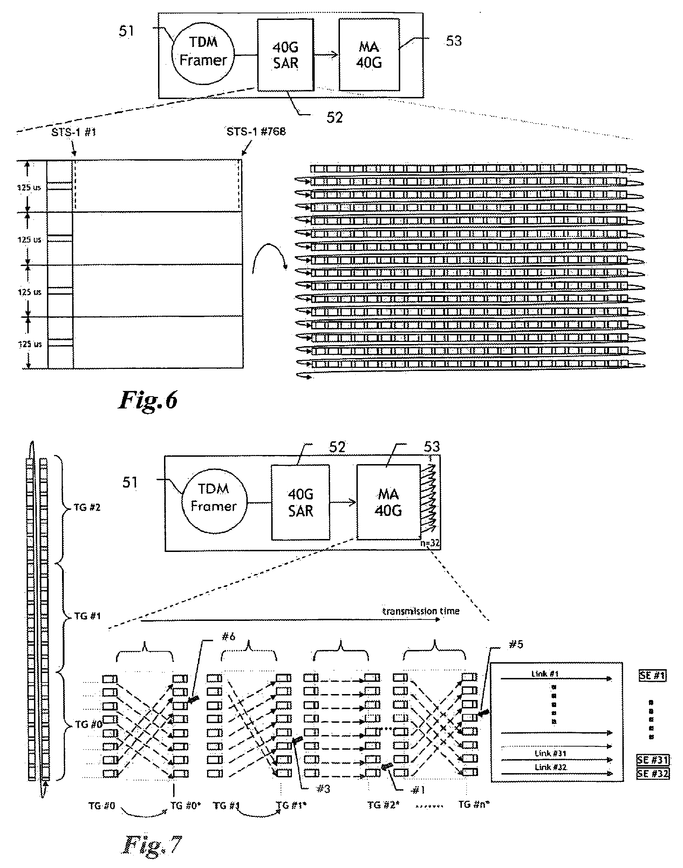

Figure 6 shows the operation of 40G SAP device 52. From TDM framer 51, SAR device 52 receives a TDM stream, which is structured into TDM frames of same length, each being sub-structured into fixed length timeslots. In the embodiment the traffic stream has a bandwidth of 40G and is of the well known SDH type. In particular, the 40G stream is composed of Synchronous Transport Modules STM256 of a frame repetition rate of 8kHz. As shown in figure 5, the 40G stream is internally generated from four received 10G traffic streams. A 10G traffic stream in SDH is composed of STM64 frames. The STM256 is build by byte-wise interleaving four STM64 from the four constituent 10G signals, Figure 6 shows four consecutive STM256 frames,

STM1 corresponds in SONET terminology to STS-3, The capacity of an STM1 can hence be logically divided into 3 STS-1 (even though these do not really exist, because of minor differences in the multiplexing). However, an STM1 can be internally transported and switched as 3 independent STS-1, which will be reassembled at the output port to an STM1, again. As already mentioned, the switch granularity of the network element in the embodiment is chosen to STS-1 equivalents. At tributary level, this allows to switch Virtual Containers VC-4 (as 3 x STS-1) as well as VC-3 (as 1 × STS-1). The network element can therefore be applied as broadband crossconnect for ETSI SDH type as well as ANSI SONET type signals. For internal switching purposes, the STM356 will therefore be handled as 768 × STS-1 equivalents. Each STS-1 equivalent will be segmented individually into cells. An STS-1 has a format of 90 columns by 9 rows, which makes in total 810 bytes. Since in the preferred embodiment, each cell carries a payload of 60 bytes, each STS-1 will produce 13,5 cells. The remaining 0,5 cell capacity will carry the first bytes of the next frame belonging to the some STS-1 timeslot position in the input signal.

Figure 6 symbolizes this process schematically. The 40G input signal is segmented into a cell stream, which contains per input frame 768 times 13,5 cells. The cells belonging to different STS-1 equivalents are interspersed such that every sequence of 768 cells contains one cell, per STS-1 equivalent. A natural choice would be that the cells belonging to the different STS-1 equivalents have a fixed order and appear in an order that corresponds to the order of the STS-1 equivalents in the input TDM frame.

However, the inventors have recognized that this may lead to problems. The reason is that in a synchronous TDM network such as SDH/SONET, the signals at all input ports are synchronous. This means that time slots at all input ports appear at the same instant in time. If now, for example, a number of time slots appearing at the same instant in time but at different input ports need to be switched into different output time slots but at the same output port, the switch fabric can get overloaded. In particular, the center stage would receive from different input ports but of the same time cells that need to go all to the some output port. This may lead to an overflow of output buffers in the switch fabric or of the input buffer at the output port.

In order to avoid this, one aspect is to decouple or decorrelate in the time domain cells from the different input ports. This is achieved in the preferred embodiment through randomizing the order of the cells in a cell stream prior to entering the switch fabric. This is possible, because each cell carries its own port and time slot addresses with it, so can be re-assembled at the output port irrespective of when it is received. It is however preferable that cells belonging to the same STS-1 equivalent will not overturn each other, even though this still may work, provided there is enough buffer space at the output port to restore the correct cell order.

In the SAR device 52, the received TDM frame needs to be buffered until sufficient bytes from each timeslot or STS-1 equivalent are received to fill a corresponding cell, The 768 STS-1 equivalents in the input frame are bytewise interleaved. Each STS-1 equivalent occupies 90 bytes in each row of the input frame. This means that, when a byte of a particular STS-1 equivalent is located at position n in a certain row of the input frame, the next byte will be found 768 bytes later, i.e; at position n+768. Since a cell carries 60 bytes, the SAR device 52 needs to hold at least 60 x 768 consecutive bytes of the received frame until it can generate and fill cells with this content. The SAR device hence holds sufficient bytes for each individual STS-1 equivalent and can therefore generate the cells in any required order, In other words, the order in which the 768 groups of 60 bytes for the 768 cells will be read out, can be randomly chosen.

According to a basic idea of the inventors, this order, i.e. the order in which cells corresponding to different timeslots in the input frame, is repeatedly changed. This change of the cell generation order can he periodically, intermittently, or randomly. For example, the cell generation order can change every cycle of 768 cells, It can also change every frame period (i.e. every 125µs), every multiframe (e.g. every 500µs), every second row, or any other suitable periodicity one might think of. It would equally be possible, to change the order in irregular or random intervals.

The purpose of this measure is to decorrelate the instants in time at which cells are generated for any set of timeslots from different input ports in order to avoid operating states which could accidentally and for on extended period of time overload the switch fabric since this might lead to an increased cell loss probability. It is therefore necessary that the way the cell generation order changes is different from one input port to another, in order to avoid that the same change occurs at multiple input ports and hence a temporary overload condition may persist,

This can be achieved in that the periodicity is chosen different from one input port to another or in that the instants in time, when changes take place, are decorrelated. It would also be possible, That different input line cards have different sets of orders they run through for the cell generation order, The simplest ond most effective way, however, is to apply in each input line card a random or pseudo random function which periodically generates a new cell generation order. In other words, in the preferred embodiment, the cell generation order is selected randomly each time and the change takes place preferably every 768 cells, i.e. after one full transmit set of cells corresponding to the number of timeslots in the input frame format has been created.

A second, alternative or additional idea, which led to a second embodiment is depicted schematically in figure 7. This second embodiment concerns the operation of the matrix adapter (MA) 53. As shown in figure 1, the switch fabric SF contains a number of parallel switch modules SE1-SEn. The matrix adapter 53 serves to distribute the individual cells over the n parallel switch modules SE1-SEn. This is typically done in a round robin fashion. According to the second basic idea, cells from different interfaces are decoupled in the time domain in that the distribution of the cells over the switch modules is randomized.

In the second embodiment, which is based on the architecture shown in figures 1 to 5, the switch fabric SF is built from 32 switch modules SE1-SE32. Hence, matrix adapter 53 has 32 bidirectional links to the 32 switch modules.

In figure 7, on the left hand side, the incoming cell stream from SAR device 52 is shown. Time flow is from bottom to top in the figure. In accordance with the 32 switch modules, a transmit group of cells has 32 cells, The 32 cells of the first transmit group TGO is distributed over the 32 parallel links towards the 32 switch modules SE1-SE32. For the sake of simplified representation, only 8 of the 32 cells of each transmit group are shown in figure 7.

The matrix adapter determines a start link. The start link for the first transmit group TGO is chosen to be link #6 (i.e. the sixths link from bottom to top). The start link for the first transmit group is indicated in the figure by a bold arrow. Matrix adapter 53 hence transmits the first cell of the transmit group TGO to link #6. The remaining 31 cells are then transmitted in a round robin fashion over the remaining 31 links. The order in which the cells of the first transmit group occur on the 32 parallel links is denoted with TG0*.

The next 32 cells form the second transmit group TG1. In order to randomize the distribution of the cells over the switch modules, the matrix adapter determines a new start link, which in this example is link #3 (i.e. the third link from the bottom). It hence transmits the first cell of TG1 to link #3 and the remaining 31 cells in a round robin fashion to the remaining 31 links.

In the same way, a new start link is chosen for the next transmit group TG2 of 32 cells, which in this example is link #1. For the n^{th} transmit group, the start link is link #5 (i.e. the fifth link from the bottom). The start link in this embodiment is chosen randomly, which means that there is no history related to the choice of the next start link with respect to the previous.

In the above embodiment, it was assumed that the capacity of matrix adapter at ingress and egress sides of the switch fabric is the same. However, in the general case, the capacity of matrix adapters at input and output can be different, A matrix adapter with half the capacity would also need only half the matrix capacity and has hence less matrix links. In order to reflect this, the matrix adapter has a "destination map", which indicates which of the egress side matrix adapters can be reached over which of the matrix links.

Moreover, the matrix adapter can further take into account failures of backplane connections or of components in the switch fabric such as individual switch modules. In order to reflect this, a "link status map" indicates, which matrix links are currently not available. Through this, it is achieved that the system remains fully operative even in case of failures.

In the general case, the matrix adapter 53 evaluates the link status map and destination bitmap for a certain cell in order to determine the set of eligible links over which that cell may be transmitted towards the fabric, It is assumed that for exetmple p (≤32) links are eligible. For a first set of p cells, the matrix adapter determines a start link and transmits the first cell to the start link. Then it transmits the remaining (p-l) cells of the first transmit group in a round robin fashion to the remaining (p-l) links. For the next cycle, it may be the case that a different number, say q links are eligible. Matrix adapter 53 then selects from the q eligible links a new start link as explained above, and so on.

Through the randomized distribution of cells over the switch modules, a temporal decoupling of synchronous events is achieved, since the pass through time depends on the fill level of buffers in the switch modules, which through the random distribution will also be random.

The configuration of the system, i.e. the crossconnection topology of the overall amount of STS-ls between all ingress line cards and egress line cards, could in a worst case result in an interference of arrival events in the center stage matrix, As a consequence, a higher cell-loss probability would be expected due to the increasing fill level of center stage buffering elements with limited depth. The above described method which improves the generic randomicity of arrival events in the center stage matrix, prevents any sensible pattern from causing repetitive, cyclo-stationary traffic patterns. It hence increases significantly the cell loss probability in a worst case configuration,

The above embodiment in based on a random or pseudo-random function to determine the start link each cycle. It should be understood that as in the first embodiment, other regular or irregular intervals can be chosen to change the start link. Moreover, it should be understood that other functions may be used to change the start link, provided, the change of the start link in all line cards is decorrelated, e.g. by different sets of start links, by different instants in time to change the start link, by different functions to change the start fink and so on. However, the random function provides the simplest and most effective solution to achieve a temporal decorrelation of simultaneous events.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A network element for switching time-division multiplex signals comprising a number of input ports (I, IO8-IO8), a number of output ports (O; IO1-IO8) and a switch fabric (SF; 58) interconnecting said input ports (I, IO1-IO8) and said output ports (O, IO1-IO8);
- wherein said switching fabric (SF; 58) is a cell based switch comprising one or more switch modules (SE1-SEn) adapted to switch fixed-length cells on the basis of addresses (H1, H2, P0, P1) contained in cell headers of said cells,
- wherein said input ports (I) comprise a segmentation device (11; 52a, 52b) for segmenting individual time slots of an input time-division multiplex signal into fixed-length cells, wherein each cell corresponds to an individual timeslot of the input time-division multiplex signal and assigning address information to each cell;
- wherein said output ports (O) comprise a reassembly device (14; 52a, 52b) for reassembling cells received from said switch fabric (SF; 58) into an output time-division multiplex signal; and
- wherein said input ports (O, IO1-IO8) are adapted to decorrelate said cells in the time domain from cells generated at other input ports of said network element.

2. A network element according to claim 1, wherein said segmentation device (11; 52a, 52b) is adapted to repeatedly change the order in which it creates cells corresponding to different time slots of an input time-division multiplex signal.

3. A network element according to claim 2, wherein said segmentation device (11; 52a, 52b) is adapted to determine said order in accordance with a random or pseudo-random function each time it changes the order.

4. A network element according to claim 2, wherein said segmentation device (11; 52a, 52b) is adapted to change said order cyclically after transmitting a predetermined number of cells to said switch fabric (SF).

5. A network element according to claim 1 or 2, wherein said switching fabric (SF; 58) comprises a number of identical switch modules (SE1-SEn) and wherein said input ports (I) comprise at least one matrix adapter (12, 53a, 53b; 53) for distributing the cells to said matrix modules (SE1-SEn) and wherein said matrix adapter (12, 53a, 53b; 53) is adapted to randomize the distribution of said cells to the said switch modules (SE1-SEn).

6. A network element according to claim 5, wherein said matrix adapter (13; 53a, 53b) also receives cells from said switch fabric (SF; 58), reorders these cells in accordance with information from headers of these cells and forwards the reordered cells to the reassembly device (14) of the corresponding output port.

7. A network element according to claim 1,
- wherein said address information contains a fabric address (H1, H2) and a TDM address (P0, P1);
- wherein said switch fabric (SF; 58) switches said cells in accordance with said fabric address (H1, H2) to a corresponding output port (O; IO1-IO8) and
- wherein said reassembly device (14; 52a, 52b) reassembles said cells in accordance with said TDM address (P0, P1).

8. A network element according to claim 7, wherein the switch fabric (SF; 58) is self-routing.

9. A network element according to claim 1, wherein one or more input ports and one or more output ports are arranged on a line card (50), which further contains a segmentation and reassembly module (52a, 52b) comprising the segmentation device (11) and the reassembly device (14) corresponding to said one or more input and output ports (IO1-IO8) and the matrix adapter (53a, 53b), and wherein said network element comprises a plurality of such line cards.

10. A network element according to claim 9, additionally comprising one or more packet line cards for receiving packet traffic signals and converting said packet traffic signals into fixed lengths cells.

11. A method of switching time-division multiplex signals comprising the steps of:
- at an input ports (I) segmenting individual time slots of an input time-division multiplex signal into fixed-length cells, wherein each cell corresponds to an individual time slot of the input time-division multiplex signal and assigning address information (H1, H2) to each cell;
- switching said cells through a cell based switch fabric (SF; 58) in accordance with said address (H1, H2) to a corresponding output port (O; IO1-IO8); and
- at said output ports (O) reassembling cells received from said switch fabric (SF; 58) into an output time-division multiplex signal,
further comprising the step of
- decorrelating in the time domain cells generated at different input ports (I) of said network element.

## Patentansprüche

1. Netzwerkelement zum Schalten von Zeitmuitiptexsignaten mit einer Anzahl von Eingangsports (I, IO1-IO8), einer Anzahl von Ausgangsports (O; IO1-IO8) und einer Switch-Fabric (SF; 58) welche die besagten Eingangsports (I, IO1-IO8) und die besagten Ausgangsports (O, IO1-IO8) miteinander verbindet;
- wobei die besagte Switch-Fabric (SF; 58) ein zellbasierter Schalter mit einem oder mehreren Schaltmodulen (SE1-SEn) und dazu ausgelegt ist, Zellen mit fester Länge auf Basis der in den Zell-Headem der besagten Zellen enthaltenen Adressen (H1, H2, P0, P1) zu schalten,
- wobei die besagten Eingangsports (I) eine Segmentierungsvorrichtung (11; 52a, 52b) zum Segmentierten einzelner Zeitschlitze eines Zeitmultiplex-Eingangssignals in Zellen mit fester Länge, wobei jede Zelle einem einzelnen Zeitschlitz des Zeitmultiplex-Eingangssignals entspricht, und zum Zuordnen von Adressinformationen zu jeder Zelle umfassen;
- wobei die besagten Ausgangsports (O) eine Wiederzusammensetzungsvorrichtung (14; 52a, 52b) zum Wiederzusammensetzen der von der besagten Switch-Fabric (SF; 58) empfangenen Zellen in ein Zeitmultiplex-Ausgangssignal umfassen; und
- wobei die besagten Eingangsports (O,IO1-I08) dazu ausgelegt sind, die besagten Zellen in dem Zeitbereich von von anderen Eingangsports des besagten Netzwerkelements erzeugten Zellen zu dekorrelieren.

2. Netzwerkelement nach Anspruch 1, wobei die besagte Segmentierungsvorrichtung (11; 52a, 52b) dazu ausgelegt ist, die Reihenfolge, in welcher sie Zellen bildet, gemäß den verschiedenen Zeitschlitzen eines Zeitmultiplex-Eingängssignals wiederholt zu wandern.

3. Netzwerkelement nach Anspruch 2, wobei die besagte Segmentierungsvorrichtung (11; 52a, 52b) dazu ausgelegt ist, die besagte Reihenfolge jedes Mal, wenn sie die Reihenfolge ändert, gemäß einer Random- und Pseudorandom-Funktion zu bestimmen.

4. Netzwerkelement nach Anspruch 2, wobei die besagte Segmentierungsvorrichtung (11; 52a, 52b) dazu ausgelegt ist, die besagte Reihenfolge nach der Übertragung einer vorbestimmten Anzahl von Zellen an die besagte Switch-Fabric (SF) zyklisch zu ändern.

5. Netzwerkelement nach Anspruch 1 oder 2, wobei die besagte Switch-Fabric (SF; 58) eine Anzahl von identischen Schaltmodulen (SE1 -SEn) umfasst, und wobei die besagten Eingangsports (I) mindestens einen Matrix-Adapter (12, 53a, 53b; 53) zum Verteilen der Zellen an die besagten Schaltmodule (SE1-SEn) umfassen, und wobei die besagten Matrix-Adapter (12, 53a, 53b; 53) für das Randomisieren der Verteilung der besagten Zellen an die besagten Schaltmodule (SE1-SEn) ausgelegt ist.

6. Netzwerkelement nach Anspruch 5, wobei der besagte Matrix-Adapter (13; 53a, 53b) ebenfalls Zellen von der besagten Switch-Fabric (SF; 58) empfängt, diese Zellen gemäß den Informationen aus den Headern dieser Zellen neu ordnet und die neu geordneten Zellen an die Wiederzusammensetzungsvorrichtung (14) des entsprechenden Ausgangsports weiterleitet.

7. Netzwerkelement nach Anspruch 1,
- wobei die besagten Adressinformationen eine Fabric-Adresse (H1, H2) und eine TDM-Adresse (P0, P1) enthalten;
- wobei die besagte Switch-Fabric (SF; 58) die besagten Zellen gemäß der besagten Fabric-Adresse (H1, H2) an einen entsprechenden Ausgangsport (O; IO1-IO8) schaltet, und
- wobei die besagte Wiederzusammensetzungsvorrichtung (14; 52a, 52b) die besagten Zellen gemäß der besagten TDM-Adresse (P0, P1) wieder zusammensetzt.

8. Netzwerkelement nach Anspruch 7, wobei die Switch-Fabric (SF; 58) selbstleitweglenkend ist.

9. Netzwerkelement nach Anspruch 1, wobei der eine oder die mehreren Eingangsports und der eine oder die mehreren Ausgangsports auf einer Leitungskarte (50) angeordnet ist, weiches weiterhin ein Segmentierungs- und Wiederzusammensetzungsmodul (52a, 52b) mit der Segmentierungsvorrichtung (11) und der Wiederzusammensetzungsvorrichtung (14), welche dem besagten einen oder den mehreren Eingangsports und dem besagten einen oder den mehreren Ausgangsports (I01-I08) entsprechen, und dem Matrix-Adapter (53a, 53b) umfasst, und wobei das besagte Netzwerkelement eine Vielzahl solcher Leitungskarten umfasst.

10. Netzwerkelement nach Anspruch 9, zusätzlich umfassend eine oder mehrere Paketleitungskarten für den Empfang von Paketverkehrssignalen und zum Konvergieren der besagten Paketverkehrssignale in Zellen mit fester Länge.

11. Verfahren zum Schalten von Zeitmultiplexsignalen, die folgenden Schritte umfassend:
- An einem Eingangsport (I), Segmentierten einzeller Zeitschlitze eines Zeitmultiplex-Eingangssignals in Zellen mit fester Länge, wobei jede Zelle einem einzelnen Zeitschlitz des Zeitmultiplex-Eingangssignals entspricht, und Zuordnen von Adressinformationen (H1, H2) zu jeder Zelle umfassen;
- Schalten der besagten Zellen über eine zellbasierte Switch-Fabric (SF; 58) gemäß der besagten Adresse (H1, H2) an einen entsprechenden Ausgangsport (O; IO1-IO8); und
- an den besagten Ausgangsports (O), Wiedervereinigen der von der besagten Switch-Fabric (SF; 58) empfangenen Zellen in ein Zeitmultiplex-Ausgangssignal,
weiterhin umfassend den Schritt des
- Dekorrelierens in dem Zeitbereich von an verschiedenen Eingangsports (I) des besagten Netzwerkelements erzeugten Zellen.

## Revendications

1. Élément de réseau pour commuter des signaux multiplexés par répartition dans le temps, comprenant un certain nombre de ports d'entrée (I ; IO1-IO8), un certain nombre de ports de sortie (O ; IO1-IO8) et une matrice de commutation (SF ; 58) interconnectant lesdits ports d'entrée (I ; IO1-IO8) et lesdits ports de sortie (O ; IO1-IO8) ;
- avec lequel ladite matrice de commutation (SF ; 58) est un commutateur basé sur une cellule comprenant un ou plusieurs modules de commutation (SE1-SEn) adaptés pour commuter des cellules de longueur fixe sur la base d'adresses (H1, H2, P0, P1) contenues dans les en-têtes de cellule desdites cellules,
- avec lequel lesdits ports d'entrée (I) comprennent un dispositif de segmentation (11 ; 52a, 52b) pour segmenter des créneaux temporels individuels d'un signal multiplexé par répartition dans le temps d'entrée en cellules de longueur fixe, chaque cellule correspondant à un créneau temporel individuel du signal multiplexé par répartition dans le temps d'entrée, et attribuer une information d'adresse à chaque cellule ;
- avec lequel lesdits ports de sortie (O) comprennent un dispositif de réassemblage (14 ; 52a, 52b) pour réassembler les cellules reçues depuis ladite matrice de commutation (SF ; 58) en un signal multiplexé par répartition dans le temps de sortie ; et
- avec lequel lesdits ports d'entrée (O, IO1-IO8) sont adaptés pour décorréler lesdites cellules dans le domaine du temps des cellules générées aux autres ports d'entrées dudit élément de réseau.

2. Élément de réseau selon la revendication 1, avec lequel ledit dispositif de segmentation (11 ; 52a, 52b) est adapté pour modifier de manière répétitive l'ordre dans lequel il crée les cellules correspondant aux différents créneaux temporels d'un signal multiplexé par répartition dans le temps d'entrée.

3. Élément de réseau selon la revendication 2, avec lequel ledit dispositif de segmentation (11 ; 52a, 52b) est adapté pour déterminer ledit ordre conformément à une fonction aléatoire ou pseudo-aléatoire à chaque fois qu'il modifie l'ordre.

4. Élément de réseau selon la revendication 2, avec lequel ledit dispositif de segmentation (11 ; 52a, 52b) est adapté pour modifier ledit ordre de manière cyclique après avoir émis un nombre prédéterminé de cellules vers ladite matrice de commutation (SF).

5. Élément de réseau selon la revendication 1 ou 2, avec lequel ladite matrice de commutation (SF ; 58) contient un certain nombre de modules de commutation (SE1-SEn) identiques et avec lequel lesdits ports d'entrée (I) comprennent au moins un adaptateur de matrice (12; 53a, 53b ; 53) pour distribuer les cellules auxdits modules de commutation (SE1-SEn) et avec lequel ledit adaptateur de matrice (12 ; 53a, 53b ; 53) est adapté pour rendre aléatoire la distribution desdites cellules auxdits modules de commutation (SE1-SEn).

6. Élément de réseau selon la revendication 5, avec lequel ledit adaptateur de matrice (13 ; 53a, 53b) reçoit également les cellules provenant de ladite matrice de commutation (5F ; 58), réarrange ces cellules conformément aux informations des en-têtes de ces cellules et transfère les cellules réarrangées au dispositif de réassemblage (14) du port de sortie correspondant.

7. Élément de réseau selon la revendication 1,
- avec lequel ladite information d'adresse contient une adresse de matrice (H1, H2) et une adresse TDM (P0, P1) :
- avec lequel ladite matrice de commutation (SF ; 58) commute lesdites cellules conformément à ladite adresse de matrice (H1, H2) vers un port de sortie correspondant (O ; IO1-IO8) et
- avec lequel ledit dispositif de réassemblage (14 ; 52a, 52b) réassemble lesdites cellules conformément à ladite adresse TDM (P0, P1).

8. Élément de réseau selon la revendication 7, avec lequel la matrice de commutation (SF ; 58) est à acheminement automatique.

9. Élément de réseau selon la revendication 1, avec lequel un ou plusieurs ports d'entrée et un ou plusieurs ports de sortie sont agencés sur une carte de lignes (50) qui contient en outre un module de segmentation et de réassemblage (52a, 52b) comprenant le dispositif de segmentation (11) et le dispositif de réassemblage (14) correspondant au(x)dit(s) un ou plusieurs port(s) d'entrée et de sortie (IO1-IO8) et l'adaptateur de matrice (53a, 53b), et avec lequel ledit élément de réseau comprend une pluralité de ces cartes de lignes.

10. Élément de réseau selon la revendication 9, comprenant en outre une ou plusieurs cartes de lignes de paquets pour recevoir les signaux de trafic en paquets et convertir lesdits signaux de trafic en paquets en cellules de longueur fixe.

11. Procédé de commutation de signaux multiplexés par répartition dans le temps, comprenant les étapes suivantes :
- sur un port d'entrée (I), segmentation de créneaux temporels individuels d'un signal multiplexé par répartition dans le temps d'entrée en cellules de longueur fixe, chaque cellule correspondant à un créneau temporel individuel du signal multiplexé par répartition dans le temps d'entrée, et attribution d'une information d'adresse (H1, H2) à chaque cellule ;
- commutation desdites cellules à travers une matrice de commutation (SF ; 58) basée sur une cellule conformément à ladite adresse (H1, H2) vers un port de sortie correspondant (O ; IO1-IO8) ; et
- au niveau desdits ports de sortie (O), réassemblage des cellules reçues depuis ladite matrice de commutation (SF ; 58) en signaux multiplexés par répartition dans le temps de sortie,
comprenant en outre l'étape suivante
- décorrélation dans le domaine du temps des cellules générées aux différents (I) ports d'entrées dudit élément de réseau.
